# EUROPEAN PATENT SPECIFICATION

(11) **EP 2 570 727 B1**
(45) Date of publication and mention of the grant of the patent: **22.05.2019**
(21) Application number: 12182739.8
(22) Date of filing: 03.09.2012
(51) Int. Cl.: F23R 3/14, F23R 3/28, F23R 3/34, F02C 7/22, F15D 1/00

(54) **Injector for pressure drop control in fluid circuits through swirling flow mitigation**
Injektor mit Druckabfallregelung in Flüssigkeitskreisläufen durch Wirbelstromabschwächung
Injecteurs avec contrôle de chute de pression dans des circuits de fluide par atténuation d'écoulement tourbillonnant

(30) Priority: 16.09.2011 US 201113235125
(43) Date of publication of application: 20.03.2013
(73) Proprietor: Rolls-Royce plc, London SW1E 6AT (GB)
(72) Inventor: Buelow, Philip E O, West Des Moines, IA Iowa 50266 (US); Thomson, Neal A, West Des Moines, IA Iowa 50265 (US)
(74) Representative: Rolls-Royce plc

(56) References cited:
- EP-A2- 1 312 866
- DE-B- 1 008 068
- US-A- 5 767 384
- US-A1- 2005 087 630
- US-B2- 7 506 510

## Description

### BACKGROUND OF THE INVENTION

### 1. Field of the Invention

The present invention relates to fuel injection, and more particularly to mitigation of swirling flow in fuel passages of fuel injectors.

### 2. Description of Related Art

Staged fuel injectors for gas turbine engines are well known in the art. They typically include a pilot fuel atomizer for use during engine ignition and low power engine operation, and at least one main fuel atomizer for use during high power engine operation. One difficulty associated with operating a staged fuel injector is that when the pilot fuel circuit is operating alone during low power operation, stagnant fuel located within the main fuel circuit can be susceptible to carbon formation or coking due to the temperatures associated with the operating environment. This can degrade engine performance over time.

To address these difficulties, efforts have been made to actively cool a staged fuel injector using the fuel flow from the pilot fuel circuit. U.S. Patent No. 7506510 describes an injector according to the preamble of claim 1. Increasingly, applications have emerged where the staging requirements include operation on pilot stage fuel at up to 60% of the maximum take-off thrust. This represents a substantial increase in the operational temperature for staged fuel injectors and tends to overheat the stagnant fuel in the un-staged main atomizer. In order to provide the additional cooling needed for such applications, the pilot fuel circuits have become increasingly intricate, which can lead to significant pilot stage pressure drop.

Such conventional methods and systems have generally been considered satisfactory for their intended purpose. However, there is still a need in the art for injectors that allow for increased pilot staging levels with improved pressure drop. There also remains a need in the art for such injectors that are easy to make and use. The present invention provides a solution for these problems.

### SUMMARY OF THE INVENTION

The subject invention is directed to an injector according to claim 1.

The invention also provides a staged fuel injector. The staged fuel injector includes a main fuel circuit for delivering fuel to a main fuel atomizer. The main fuel atomizer includes a radially outer prefilmer and a radially inner fuel swirler, wherein portions of the main fuel circuit are formed in the prefilmer. A pilot fuel circuit is included for delivering fuel to a pilot fuel atomizer which is located radially inward of the main fuel atomizer. The pilot fuel circuit includes a plurality of flow channels defined in the prefilmer and the fuel swirler. The pilot fuel circuit also includes a conduit for conveying fuel from the flow channels to the pilot fuel atomizer. The conduit is in fluid communication with the flow channels at an orifice. A flow splitter is defined in each of the flow channels proximate the orifice. Each flow splitter is configured and adapted to mitigate formation of swirling flow on fluids passing through the orifice from the flow channels into the conduit.

In certain embodiments, a portion of each flow channel of the pilot fuel circuit defined in the radially outer prefilmer is in fluid communication with a portion of the respective flow channel defined in the radially inner fuel swirler by way of a radial passage. The radial passage can be circular or can have a non-circular cross-sectional shape selected from the group consisting of pill-shaped, oblong, ovoid, or any other suitable non-circular shape. The flow channel upstream of the radial passage includes a flow splitter configured and adapted to mitigate formation of swirling flow on fluids passing through the radial passage. The radially outer prefilmer, the radially inner fuel swirler, and the flow splitters can be integral with one another. It is also contemplated that the flow splitters can be integral with the radially inner fuel swirler, which can be joined together with the radially outer prefilmer at a braze joint. If a given channel is wide enough, two or more flow splitters can be included in the channel side by side without departing from the spirit and scope of the invention.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art to which the subject invention appertains will readily understand how to make and use the devices and methods of the subject invention without undue experimentation, preferred embodiments thereof will be described in detail herein below with reference to certain figures, wherein:
Fig. 1 is a perspective view of an exemplary embodiment of a staged fuel injector constructed in accordance with the present invention, showing the spray outlet;
Fig. 2 is a perspective view of the injector of Fig. 1, showing the inlet end portion of the injector;
Fig. 3 is a cross-sectional side elevation view of the injector of Fig. 1, showing the fuel and air circuits for the main and pilot fuel stages;
Fig. 4A is a schematic view of the main prefilmer portion of the injector of Fig. 1, showing the fuel passages formed in the radially outer surface thereof;
Fig. 4B is a schematic view of the main fuel swirler portion of the injector of Fig. 1, showing the fuel passages formed in the radially outer surface thereof, including the flow splitters;
Fig. 5A is a perspective view of the main prefilmer of Fig. 4A, showing the fuel passages formed in the radially outer surface thereof;
Fig. 5B is a perspective view of the main fuel swirler of Fig. 4B, showing the fuel passages and flow splitters formed therein;
Fig. 6 is a cut away perspective view of a portion of the injector of Fig. 1, showing schematically the swirling flow resulting when there are no flow splitters proximate the bore leading to the pilot fuel atomizer;
Fig. 7 is a cut away perspective view of a portion of the injector of Fig. 1, showing the flow splitters, wherein the flow into the bore is shown schematically wherein the flow splitters mitigate the formation of swirling flows proximate the bore leading to the pilot fuel atomizer;
Fig. 8 is a cut away perspective view of the portion of the injector of Fig. 7, schematically showing the effects of a total blockage in one of the four branches of the fuel channels adjacent the flow splitters;
Fig. 9 is a perspective view of a portion of the prefilmer of Fig. 5A, showing the pill-shaped radial ports for passage of fuel into the fuel channels of the fuel swirler; and
Fig. 10 is a cut away perspective view of a portion of another exemplary embodiment of a staged fuel injector constructed in accordance with the subject invention, showing a single flow splitter extending over the bore leading to the pilot fuel atomizer.

### DETAILED DESCRIPTION OF THE PREFERRED EMBODIMENTS

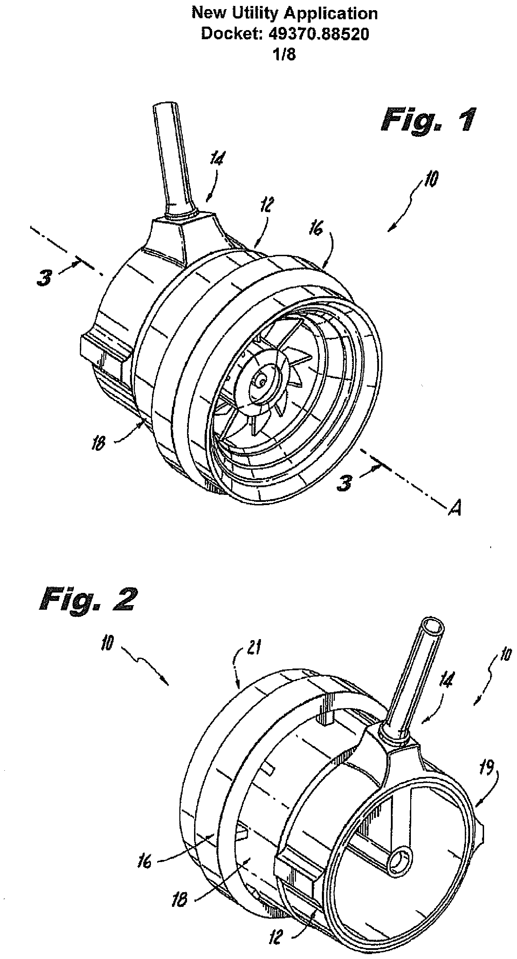

Reference will now be made to the drawings wherein like reference numerals identify similar structural features or aspects of the subject invention. For purposes of explanation and illustration, and not limitation, a partial view of an exemplary embodiment of an injector in accordance with the invention is shown in Fig. 1 and is designated generally by reference character 10. Other embodiments of injectors in accordance with the invention, or aspects thereof, are provided in Figs. 2-10, as will be described. The systems and methods of the invention can be used to reduce pressure loss by mitigating swirling flow in flow channels, such as in fuel injectors for gas turbine engines.

Referring now to Fig. 1, fuel injector 10 is adapted and configured for delivering fuel to the combustion chamber of a gas turbine engine. Fuel injector 10 is generally referred to as a staged fuel injector in that it includes a pilot fuel circuit, which typically operates during engine ignition and at low engine power and a main fuel circuit, which typically operates at high engine power (e.g., at take-off and cruise) and is typically staged off at lower power operation.

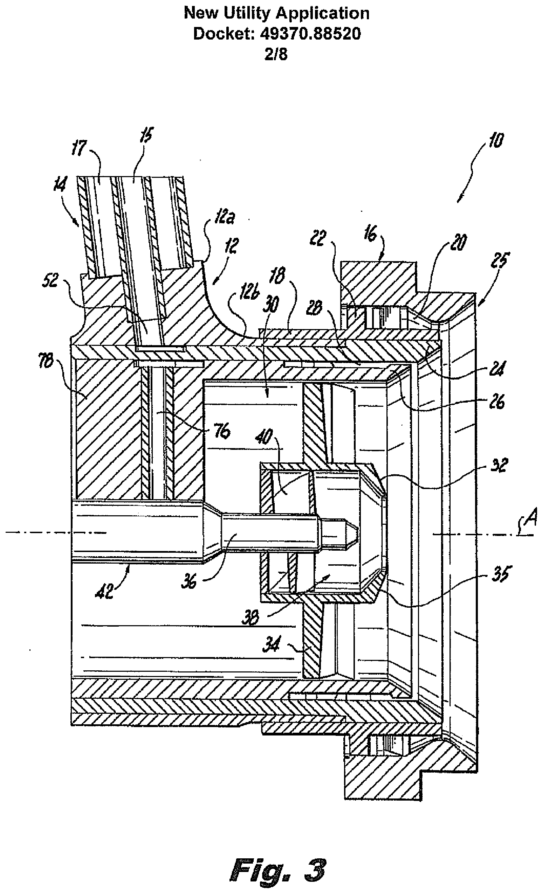

Fuel injector 10 includes a generally cylindrical nozzle body 12, which depends from an elongated feed arm 14, and defines a longitudinal axis A. In operation, main and pilot fuel is delivered into nozzle body 12 through concentric fuel feed tubes. As shown in Fig. 3, these feed tubes include an inner/main fuel feed tube 15 and an outer/pilot fuel feed tube 17 located within the feed arm 14. Although not depicted herein, it is envisioned that the fuel feed tubes could be enclosed within an elongated shroud or protective strut extending from a fuel fitting to the nozzle body.

Referring now to Fig. 2, at the same time fuel is delivered to nozzle body 12 through feed arm 14, pressurized combustor discharge air is directed into the inlet end 19 of nozzle body 12 and directed through a series of main and pilot air circuits or passages, which are shown in Fig. 3. The air flowing through the main and pilot air circuits interacts with the main and pilot fuel flows from feed arm 14. That interaction facilitates the atomization of the main and pilot fuel issued from the outlet end 21 of nozzle body 12 and into the combustion chamber of the gas turbine engine.

Referring now to Fig. 3, nozzle body 12 includes a main fuel atomizer 25 that has an outer air cap 16 and a main outer air swirler 18. A main outer air circuit 20 is defined between the outer air cap 16 and the outer air swirler 18. Swirl vanes 22 are provided within the main outer air circuit 20, depending from outer air swirler 18, to impart an angular component of swirl to the pressurized combustor air flowing therethrough.

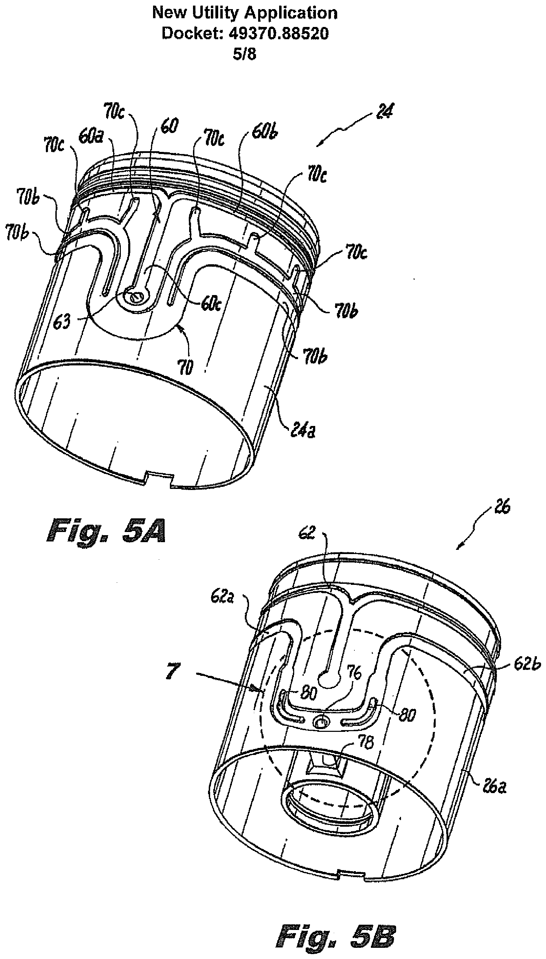

An outer fuel prefilmer 24 is positioned radially inward of the outer air swirler 18 and a main fuel swirler 26 is positioned radially inward of the prefilmer 24. Prefilmer 24 has a diverging prefilming surface at the nozzle opening. As described in more detail herein below with reference to Figs. 5A and 5B, portions of the main and pilot fuel circuits are defined in the outer diametrical surfaces 24a and 26a of the prefilmer 24 and main fuel swirler 26, respectively.

With continuing reference to Fig. 3, the main fuel circuit receives fuel from the inner feed tube 15 and delivers that fuel into an annular spin chamber 28 located at the aft end of the main fuel atomizer. The main fuel atomizer further includes a main inner air circuit 30 defined between the main fuel swirler 26 and a converging pilot air cap 32. Swirl vanes 34 are provided within main inner air circuit 30, depending from pilot air cap 32, to impart an angular component of swirl to the pressurized combustor air flowing therethrough. In operation, swirling air flowing from main outer air circuit 20 and main inner air circuit 30 impinge upon the fuel issuing from spin chamber 28, to promote atomization of the fuel.

Nozzle body 12 further includes an axially located pilot fuel atomizer 35 that includes the converging pilot air cap 32 and a pilot outer air swirler 36. A pilot outer air circuit 38 is defined between pilot air cap 32 and pilot outer air swirler 36. Swirl vanes 40 are provided within pilot outer air circuit 38, depending from air swirler 36, to impart an angular component of swirl to the air flowing therethrough. A pilot fuel swirler 42, shown here by way of example, as a pressure swirl atomizer, is coaxially disposed within the pilot outer air swirler 36. The pilot fuel swirler 42 receives fuel from the pilot fuel circuit by way of the inner pilot fuel conduit 76 in support flange 78. Pilot fuel conduit 76 is oriented radially, or perpendicularly with respect to longitudinal axis A.

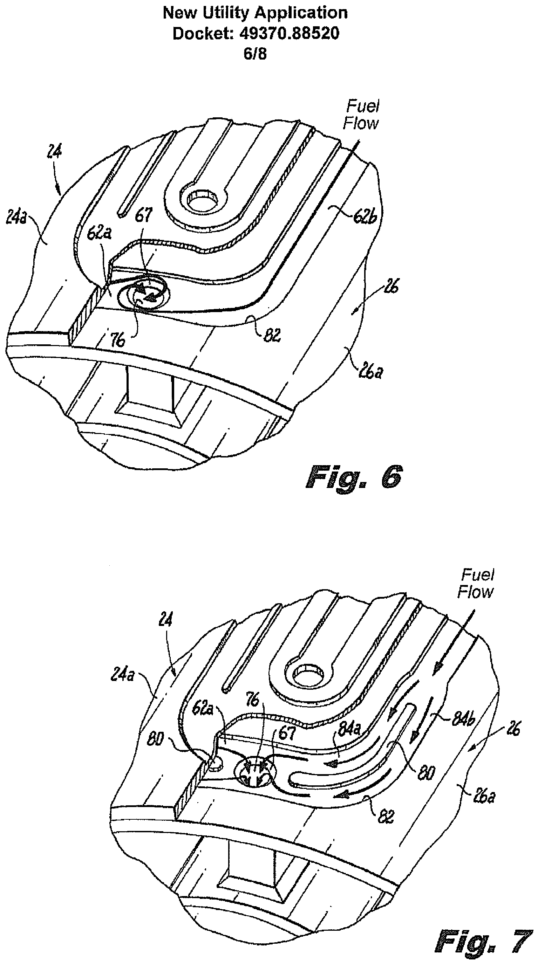

Nozzle body 12 includes a tube mounting section 12a and an atomizer mounting section 12b of reduced outer diameter. Tube mounting section 12a includes radially projecting mounting appendage that defines a primary fuel bowl for receiving concentric fuel tubes 15 and 17 of feed arm 14. A central main bore 52 extends from the fuel bowl for communicating with inner/main fuel tube 15 to deliver fuel to the main fuel circuit. Dual pilot fuel bores (not shown, but see, e.g., bores 54a and 54b in Fig. 6 of the above-referenced U.S. Patent No. 7,506,510) communicate with and extend from the fuel bowl for delivering pilot/cooling fuel from outer/pilot fuel tube 17 to the pilot fuel circuit.

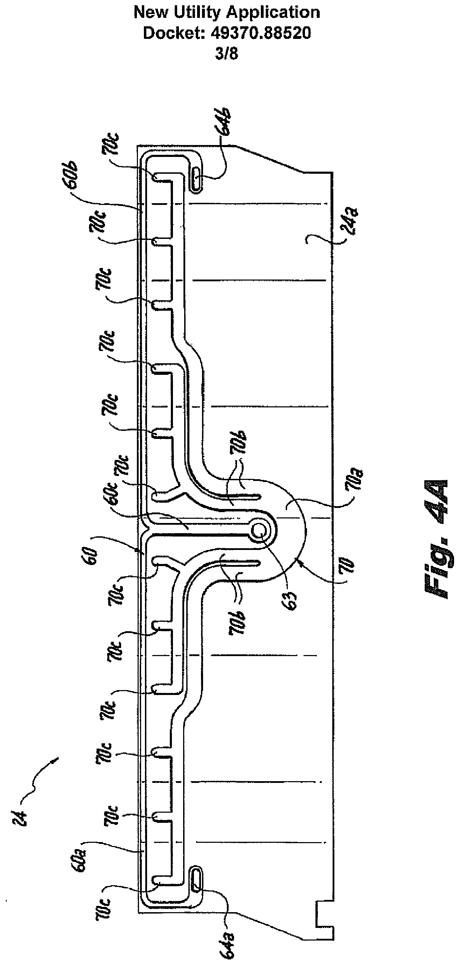

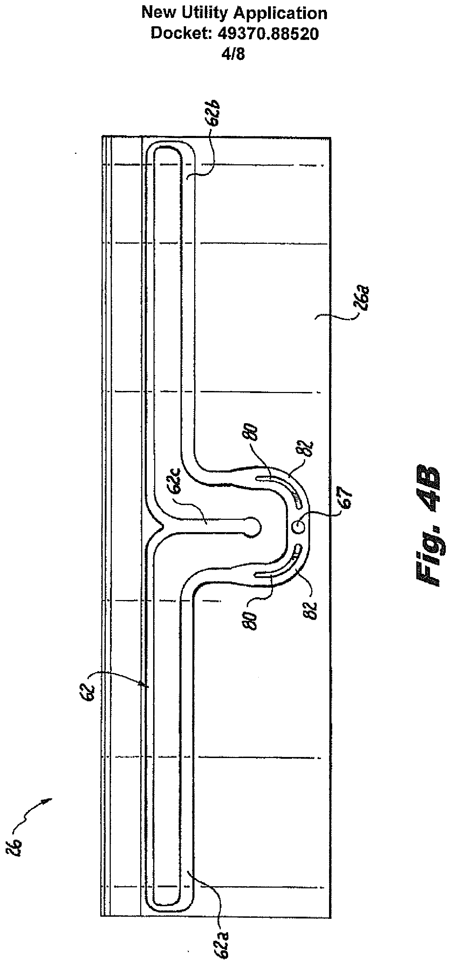

Referring now to Figs. 4A and 4B, the outer diametrical surface 24a of outer prefilmer 24 and the outer diametrical surface 26a of main fuel swirler 26 include channels or grooves that form portions of the main and pilot fuel circuits or pathways. Fig. 4A is a schematic representation of prefilmer 24 as if unrolled from its cylindrical form shown in Fig. 5A to show the fluid pathways schematically. Outer pilot fuel circuit 60 includes two generally J-shaped fuel circuit half-sections 60a and 60b and a central section 60c formed in surface 24a. Main fuel circuit 70 is also formed in outer diametrical surface 24a of outer prefilmer 24. Main fuel circuit 70 is located forward, i.e., toward inlet end 19 shown in Fig. 2, of the two pilot fuel circuit half-sections 60a and 60b and consists of a central fuel distribution section 70a which distributes fuel to four feed channels 70b that terminate in twelve (12) axially extending exit sections 70c. As discussed in the above-referenced U.S. Patent Application Serial No. 12/932,958, the exit sections 70c provide fuel to exit ports that feed into spin chamber 28, which is shown in Fig. 3. The outer pilot fuel circuit half-sections 60a and 60b receive fuel from the pilot fuel tube 17 (see Fig. 3) via the central section 60c. A portion of the pilot fuel provided by the fuel tube 17 is directed to an inner pilot fuel circuit 62, which is described below with reference to Figs. 4B and 5B, through port 63. Main fuel circuit 70 receives fuel from central fuel bore 52, by way of inner fuel tube 15, shown in Fig. 3.

Referring now to Figs. 4B and 5B, inner pilot fuel circuit 62 is formed in the outer diametrical surface 26a of fuel swirler 26. Fig. 4B is a schematic representation of swirler 26 as if unrolled from its cylindrical form shown in Fig. 5B to show the fluid pathways schematically. The inner pilot fuel circuit 62 includes a central section 62c, which receives the pilot fuel from port 63 (see Fig. 4A), and commonly terminating U-shaped channels 62a and 62b. In addition to receiving fuel from the central section 62c, the channels 62a and 62b are fed fuel from respective radial transfer ports 64a and 64b (see Fig. 4A) associated with outer pilot fuel circuit half-sections 60a and 60b, respectively. Fuel from the channels 62a and 62b is directed to the pilot fuel swirler 42, shown in Fig. 3, through an inner pilot fuel bore 67 formed in pilot atomizer support flange 78, which depends from the interior surface of fuel swirler 26. As described in the above-referenced U.S. Patent Application Serial No. 12/932,958, fuel traveling through the outer and inner pilot fuel circuits 60 and 62 is directed into thermal contact with the outer main fuel circuit 70, en route to the pilot fuel atomizer 35 located along the axis A of nozzle body 12. Each flow channel 62a and 62b includes a bend 82 therein extending from the junction with bore 67 to a point upstream of the junction. Each of channels 62a and 62b includes a respective flow splitter 80 in the respective bend 82 for swirling flow mitigation, as described in greater detail below with respect to Fig. 7. While described in the exemplary context of having two channels at the junction, those skilled in the art will readily appreciate that any suitable number of channels can be included without departing from the scope of the invention.

Referring now to Fig. 6, prefilmer 24 is joined outboard of swirler 26 by any suitable technique such as brazing. In this manner, the fuel channels formed in the outer surfaces 24a and 26a are formed in a cylindrical region around the axis A shown in Fig. 1. It is also contemplated that a prefilmer and swirler could be formed as an single integral component, such as by additive manufacturing techniques as described in the above-referenced U.S. Patent Application Serial No. 12/932,958.

It has been discovered in conjunction with the subject invention that in fluid circuits having a junction of flow channels such as the junction of channels 62a and 62b with inner pilot fuel bore 67, a swirling flow can result at the junction. Fig. 6 shows a fluid circuit, i.e., inner pilot fuel circuit 62, with two opposed channels 62a and 62b which are joined with a conduit 76 at a junction proximate inner pilot fuel bore 67. The flow arrows in Fig. 6 schematically indicate the swirling flow generated by this arrangement of channels, orifice, and conduit. Fig. 6 shows flow channels 62a and 62b without flow splitters 80 in order to describe the swirling flow effect.

Without wishing to be bound by theory, it is believed that for internal flow of liquids or gases, as the flow transitions from a channel to a hole or tube, which may be oriented perpendicular to the general incoming flow path, a swirling flow field can be established in the flow as it passes through the hole or tube. Relatively minor fluctuations or imbalances in the flow from channels meeting a hole or tube give rise to the swirling flow draining into the hole or tube. The swirling flow is stable, and it is believed that depending on the upstream fluctuations and/or imbalances, the swirl direction can vary to be clockwise or counter clockwise from circuit to circuit. Such swirling flows have been demonstrated with test hardware as well as with CFD modeling in conjunction with the subject invention.

While there may be applications where swirling flow behavior is desirable, such as for increasing heat transfer or for a cyclone particle separator, the swirling flow indicated in Fig. 6 has the detrimental effect of lowering the effective flow number for the fluid circuit, effectively reducing the available flow area through conduit 76 (where flow number is mass flow rate by the square-root of the pressure-drop). Swirling flow creates a loss in useful (or useable) energy due to flow in non-desired directions, i.e. flow around a conduit rather than through the conduit, and ultimately acts like a blockage to reduce flow number. This reduced flow number translates into pressure drop that exceeds predictions based on standard design techniques, i.e., standard design techniques do not account for the pressure drop due to the swirling flow effects described above. This swirl-related pressure drop becomes particularly significant in applications where a relatively high flow is required in the fluid circuit, such as in pilot stages of fuel injectors operating at 60% of the maximum take-off thrust with pilot stage fuel only.

Referring now to Fig. 7, in order to mitigate the swirling flow phenomenon described above, fluid circuits constructed in accordance with the subject invention include flow splitters 80 defined in each of the flow channels 62a and 62b proximate the respective outlet orifice, e.g., bore 67 leading to conduit 76. Each flow splitter 80 is configured and adapted to mitigate formation of swirling flow on fluids passing through the outlet orifice from the flow channels. As indicated schematically by flow arrows in Fig. 7, each flow splitter 80 splits the flow in its respective channel going around the respective bend 82, reducing variation in pressure, velocity, and mass flow-rate in fluids approaching bore 67. According to the invention, flow splitters such as flow splitters 80 can help avoid flow separations around sharp turns in their respective flow channel. The effect of flow splitters 80 is that a strong swirl or vortex does not form at the junction with bore 67. In short, flow splitters 80 reduce or eliminate swirling flow and the related pressure drop, effectively providing a higher flow number than would otherwise be provided.

With continued reference to Fig. 7, each flow splitter 80 includes an elongate flow splitter body dividing a portion of the respective flow channel into two branches 84a and 84b. The two branches 84a and 84b are substantially equal to one another in flow area, and the respective flow channel 62a or 62b has a flow area upstream of branches 84a and 84b that is substantially equal to that of the two branches 84a and 84b combined.

Each flow splitter 80 is elongate in a longitudinal direction around bend 82 and has a substantially rectangular cross-section normal to the longitudinal direction along the length thereof. This can be accomplished by machining branches 84a and 84b out of surface 26a, for example. A gap, e.g., 0,25 mm (0.010 inches) or more, can be provided between the flow splitters 80 and the inner surface of prefilmer 24, which can be advantageous in preventing a braze fillet from forming on the top of the splitters 80. The respective flow splitter 80 of each of the flow channels 62a and 62b extends longitudinally through a majority of the respective bend 82.

Each flow splitter 80 should be spaced apart from the respective outlet orifice, e.g., bore 67, by a distance in a range of about 0.0 times to about 1.0 times the width of the outlet orifice, i.e., from no distance to about one outlet orifice diameter's distance, with no distance/spacing being the most effective for swirl mitigation. Swirling flow can be mitigated with distances outside this range, but generally, the effects of mitigating unwanted swirl diminish as this distance increases. This distance should be maintained to prevent the flows from the two branches 84a and 84b from fully rejoining into a single flow that could generate a swirling flow before passing into bore 67.

On the opposite end, namely the far end from bore 67, each flow splitter 80 extends in a direction away from the outlet orifice to a distance that depends on the particular application. It is important that the upstream extent of flow splitters 80 be located upstream of or very near to where the channel turns from a straight run. In other words, flow splitters 80 should extend upstream of their respective bend 82 for the most effective swirl mitigation. The upstream end of a flow splitter 80 can be located downstream of the start of a bend 82, however the effectiveness is generally diminished. In applications where there is no bend 82 prior to a bore such as bore 67, a nominal flow splitter length of about twice the channel width should be used. Generally, the longer the flow splitter length, the more effective the flow splitter at mitigating unwanted swirl. In short, the flow splitters 80 should extend upstream far enough to split the flow at a point upstream of any potential swirl effects forming.

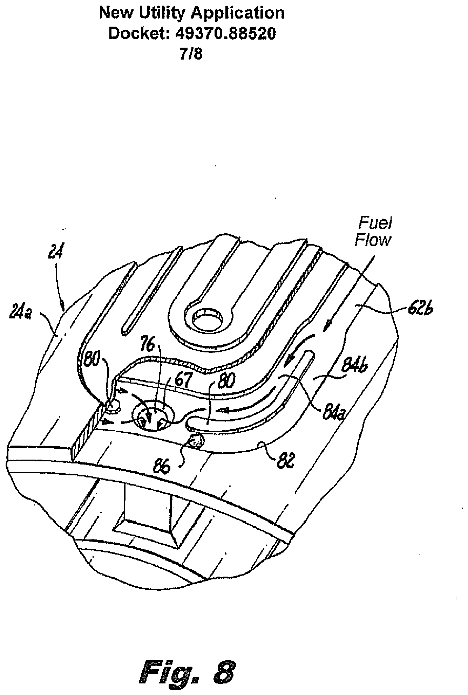

Referring now to Fig. 8, branches 84a and 84b are dimensioned and configured to mitigate formation of swirling flow on fluids passing through the orifice even when flow is not even among the four branches 84a and 84b. This is the case even if one of the branches has a total flow blockage. Flow blockage 86 is shown in Fig. 8 completely blocking off flow through branch 84b of channel 62b. However, it has been demonstrated in conjunction with the subject invention that the remaining three branches 84a and 84b of channels 62a and 62b do not form a strongly swirling flow at bore 67. Rather, the flows from the three unblocked branches 84a and 84b enter conduit 76 as indicated schematically by flow arrows in Fig. 8. Thus even if one of the four branches 84a or 84b becomes completely blocked off, the total pilot fuel circuit flow can still be ample for a given application, and the overall flow is still better than if no flow splitters 80 are provided. Blockages such as blockage 86 can arise during the manufacture of an injector, such as by excess braze flowing into one of the branches 84a or 84b when joining fuel swirler 26 to prefilmer 24, or can result from debris or impurities in the fuel, or the like.

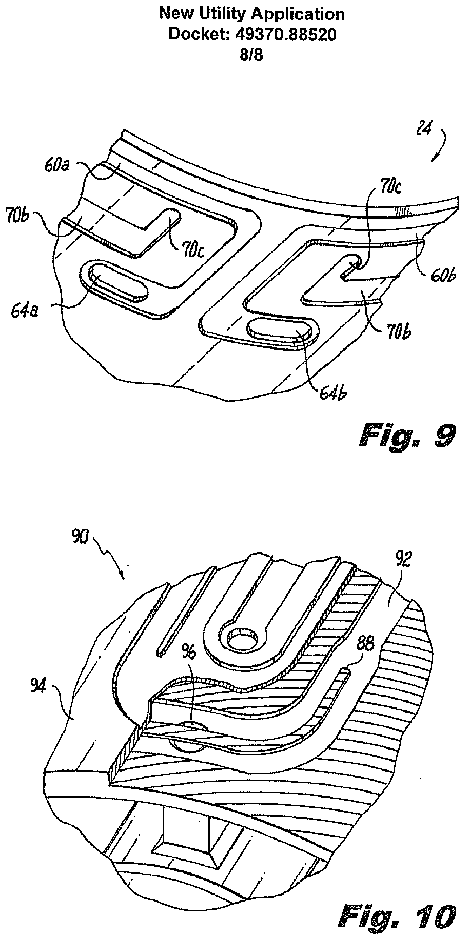

Referring now to Fig. 9, another manner of reducing swirling flow at a junction between a flow channel and an orifice in accordance with the subject invention involves the shape of the orifice itself. Fig. 9 shows a portion of prefilmer 24 diametrically opposite bore 67 shown in Figs. 7 and 8. The ends of the generally J-shaped fuel circuit half-sections 60a and 60b include radial transfer ports 64a and 64b, also shown in Fig. 4A, for allowing fuel to flow radially inward into channels 62a and 62b, shown in Figs. 4B and 5B. There is a potential to form a swirling flow at ports 64a and 64b, much as described above, even though the flow junction includes only one channel with a perpendicular port or orifice, rather than two opposed channels. However, ports 64a and 64b are elongate and have a pill shape, rather than being simple circular bores. This elongate shape reduces swirling flow and therefore reduces pressure drop across the ports 64a and 64b. It is also contemplated that in accordance with the subject invention an outlet orifice, such as ports 64a and 64b, can have any suitable shape that substantially deviates from a perfect circle, such as oblong or ovoid. Generally, the larger the aspect ratio of the non-circular orifice shape, the more effective the swirl mitigation. In other words, the more eccentric an elliptical orifice is, or the larger the width to length ratio is for a pill shaped orifice, for example, the more effective the orifice is at mitigating swirl. It is also contemplated that flow splitters such as flow splitters 80 could be positioned upstream of ports 64a and 64b to mitigate swirling flow, in which case the ports 64a and 64b could be circular or non-circular as described above. Additionally, it is also contemplated that in addition to flow splitters 80, bore 67 and/or conduit 76 of Fig. 7 could be non-circular as described above to mitigate swirling flow therein. In short, non-circular orifice/tube shapes and flow splitters can be used to mitigate swirling flow where flow channels have ports or radial passages therethrough, such as in radial ports 64a and 64b or as in bore 67 and conduit 76. Moreover, while described herien in the exemplary context of radially inward flow through a radial orifice, those skilled in the art will readily appreciate that the flow mitigating features described herein can also be used for radially outward flow through a radial orifice.

With reference now to Fig. 10, a portion of another exemplary embodiment of an injector 90 includes an integral swirler and prefilmer component 94, much like prefilmer 24 and swirler 26 described above, but formed as a single component. This can be accomplished, for example, by additive manufacturing techniques such as those described in the above-referenced U.S. Patent Application Serial No. 12/932,958. Since component 94 is formed as a single, integral component, flow splitter 88 can extend across bore 96. Flow splitter 88 is generally similar to flow splitters 80 described above, but is a single elongate structure rather than two separate structures each stopping short of bore 67 as shown in Fig. 7. This configuration enhances the maintenance of separate flows in each branch of channels 92 all the way to bore 96.

The exemplary embodiments described above show applications where flow channels have bores or conduits joining them at a perpendicular orientation, however those skilled in the art will readily appreciate that oblique angles for the bores or conduits can also be used without departing from scope of the invention.

The apparatus described above are useful in reducing swirling flow and therefore pressure drop in flow geometries such as those described above. This can be particularly advantageous in applications such as pilot fuel circuits for fuel injectors in gas turbine engines where fuel staging requirements include pilot only operation at up to 60% or more of the maximum take-off thrust. Other advantages for fuel injector applications include the reduced likelihood of coking because of lower fuel temperatures that result from shorter fuel residence time in the fuel channels due to mitigation of regions of recirculating flow.

The systems of the present invention, as described above and shown in the drawings, provide for fluid circuits, such as in injectors, with superior properties including improved pressure drop through swirling flow mitigation.

## Claims

1. An injector comprising:
a) an injector body (24, 26) defining a longitudinal axis (A);
b) a fluid circuit (62) defined in the injector body, the fluid circuit including at least one flow channel (62a;62b) defined in a cylindrical region around the longitudinal axis and being in fluid communication with an orifice (67) for passage of fluids out from the flow channel (62a; 62b) into a radial direction with respect to the longitudinal axis (A), wherein the fluid circuit includes at least a second flow channel defined in the cylindrical region around the longitudinal axis of the injector body so that said first an second flow channels oppose one another at a junction with the orifice; and **characterised by**
c) a flow splitter (80) defined in each of said flow channels (62a; 62b) proximate the orifice(67), for splitting the flow into two branches (84a, 84b) the flow splitter being configured and adapted to mitigate formation of swirling flow on fluids passing through the orifice (67) from the flow channel, wherein each flow channel includes a bend therein extending from the orifice (67) to a point upstream of the orifice, and wherein the flow splitter (80) extends longitudinally through a majority of the bend in the flow channel (62a; 62b).

2. An injector as recited in claim 1 wherein the two branches (84a, 84b) of each flow channel (62a; 62b) are equal to one another in flow area.

3. An injector as claimed in any preceding claim wherein the or each respective flow channel (62a; 62b) has a flow area upstream of the two branches (84a, 84b) that is substantially equal to that of the two branches combined.

4. An injector as claimed in any preceding claim wherein each flow splitter (80) is elongate in a longitudinal direction and has a substantially rectangular cross-section normal to a longitudinal direction along the length thereof.

5. An injector as claimed in any preceding claim wherein each flow splitter (80) is spaced apart from the outlet orifice by a distance in a range of from 0.0 times to 1.0 times the width of the outlet orifice.

6. An injector as claimed in any preceding claim wherein the or each flow splitter (80) extends in a direction away from the outlet orifice to a point upstream of the bend in the respective channel.

7. An injector as claimed in any preceding claim wherein the flow splitter (80) is integral with the injector body.

8. An injector as recited in any preceding claim, wherein the outlet orifice has a shape that deviates from a perfect circle.

9. An injector as recited in claim 8 wherein the orifice (64a, 64b) has a cross-sectional shape selected from the group consisting of pill-shaped, oblong and ovoid.

10. An injector as claimed in any preceding claim wherein the injector is a staged fuel injector comprising;
a main fuel circuit for delivering fuel to a main fuel atomizer, the main fuel atomizer (25) including a radially outer prefilmer (24) and a radially inner fuel swirler (26), wherein portions of the main fuel circuit are formed in the prefilmer (24);
a pilot fuel circuit for delivering fuel to a pilot fuel atomizer (35) which is located radially inward of the main fuel atomizer (25), the pilot fuel circuit including a plurality of flow channels (62a, 62b) defined in the prefilmer (24) and the fuel swirler (26), the flow channels in fluid communication with an orifice (67) for passage of fluids out from the flow channels, wherein the pilot fuel circuit has a configuration as defined in any preceding claim.

11. An injector as claimed in claim 10 wherein the radially outer prefilmer (24), the radially inner fuel swirler (26), and the flow splitters (80) are integral with one another.

## Patentansprüche

1. Injektor, umfassend:
a) einen Injektorkörper (24, 26), der eine Längsachse (A) definiert;
b) einen Fluidkreislauf (62), der in dem Injektorkörper definiert ist, wobei der Fluidkreislauf wenigstens einen Strömungskanal (62a; 62b) aufweist, der in einem zylindrischen Bereich um die Längsachse definiert ist und sich in Fluidkommunikation mit einer Öffnung (67) für den Verlauf von Fluids in eine radiale Richtung im Verhältnis zu der Längsachse (A) aus dem Strömungskanal (62a; 62b) befindet, wobei der Fluidkreislauf wenigstens einen zweiten Strömungskanal aufweist, der in dem zylindrischen Bereich um die Längsachse des Injektorkörpers definiert ist, so dass sich der erste und der zweite Strömungskanal an einer Verbindungsstelle mit der Öffnung gegenüber liegen; und **gekennzeichnet durch**
c) einen Strömungsteiler (80), der in jedem der Strömungskanäle (62a; 62b) proximal zu der Öffnung (67) definiert ist, um die Strömung in zwei Zweige (84a, 84b) aufzuteilen, wobei der Strömungsteiler so gestaltet und geeignet ist, die Bildung von Wirbelströmung von Fluids zu mindern, die aus dem Strömungskanal durch die Öffnung (67) verlaufen, wobei jeder Strömungskanal darin eine Biegung aufweist, die sich von der Öffnung (67) zu einem Punkt stromaufwärts der Öffnung erstreckt, und wobei sich der Strömungsteiler (80) längs durch einen Großteil der Biegung in dem Strömungskanal (62a; 62b) erstreckt.

2. Injektor nach Anspruch 1, wobei die beiden Zweige (84a, 84b) jedes Strömungskanals (62a; 62b) den gleichen Strömungsquerschnitt aufweisen.

3. Injektor nach einem der vorstehenden Ansprüche, wobei der oder jede entsprechende Strömungskanal (62a; 62b) stromaufwärts der beiden Zweige (84a, 84b) einen Strömungsquerschnitt aufweist, der im Wesentlichen dem der beiden Zweige zusammengenommen entspricht.

4. Injektor nach einem der vorstehenden Ansprüche, wobei jeder Strömungsteiler (80) in eine Längsrichtung länglich ist und einen im Wesentlichen rechteckigen Querschnitt senkrecht zu einer Längsrichtung entlang dessen Länge aufweist.

5. Injektor nach einem der vorstehenden Ansprüche, wobei jeder Strömungsteiler (80) zu der Auslassöffnung einen Abstand aufweist, der zwischen dem 0,0-fachen und dem 1,0-fachen der Breite der Auslassöffnung liegt.

6. Injektor nach einem der vorstehenden Ansprüche, wobei sich der oder jeder Strömungsteiler (80) in eine von der Auslassöffnung weggehende Richtung zu einem Punkt stromaufwärts der Biegung in dem entsprechenden Kanal erstreckt.

7. Injektor nach einem der vorstehenden Ansprüche, wobei der Strömungsteiler (80) mit dem Injektorkörper integral ist.

8. Injektor nach einem der vorstehenden Ansprüche, wobei die Auslassöffnung eine Form aufweist, die von einem perfekten Kreis abweicht.

9. Injektor nach einem der vorstehenden Ansprüche, wobei die Öffnung (64a, 64b) eine Querschnittsform aufweist, die ausgewählt ist aus der Gruppe bestehend aus pillenförmig, länglich und eiförmig.

10. Injektor nach einem der vorstehenden Ansprüche, wobei der Injektor ein Stufenkraftstoffinjektor ist, der folgendes umfasst:
einen Hauptkraftstoffkreislauf für die Zufuhr von Kraftstoff an einen Hauptkraftstoffzerstäuber, wobei der Hauptkraftstoffzerstäuber (25) einen radial äußeren vorgeschalteten Filmbilder (24) und einen radial inneren Kraftstoffverwirbler (26) aufweist, wobei Teile des Hauptkraftstoffkreislaufs in dem vorgeschalteten Filmbilder (24) ausgebildet sind; einen Pilotkraftstoffkreislauf für die Zufuhr von Kraftstoff an einen Pilotkraftstoffzerstäuber (35), der radial einwärts zu dem Hauptkraftstoffzerstäuber (25) angeordnet ist, wobei der Pilotkraftstoffkreislauf eine Mehrzahl von Strömungskanälen (62a, 62b) aufweist, die in dem vorgeschalteten Filmbilder (24) und dem Kraftstoffverwirbler (26) definiert sind, wobei sich die Strömungskanäle in Fluidkommunikation mit einer Öffnung (67) befinden, so dass Fluid aus den Strömungskanälen austreten kann, wobei der Pilotkraftstoffkreislauf eine gemäß einem der vorstehenden Ansprüche definierte Gestalt aufweist.

11. Injektor nach Anspruch 10, wobei der radial äußere vorgeschaltete Filmbilder (24), der radial innere Kraftstoffverwirbler (26) und die Strömungsteiler (80) miteinander integral ausgebildet sind.

## Revendications

1. Injecteur comprenant :
a) un corps d'injecteur (24, 26) définissant un axe longitudinal (A) ;
b) un circuit de fluide (62) défini dans le corps d'injecteur, le circuit de fluide comprenant au moins un canal d'écoulement (62a ; 62b) défini dans une région cylindrique autour de l'axe longitudinal et étant en communication fluidique avec un orifice (67) pour le passage de fluides hors du canal d'écoulement (62a ; 62b) dans une direction radiale par rapport à l'axe longitudinal (A), le circuit de fluide comprenant au moins un second canal d'écoulement défini dans la région cylindrique autour de l'axe longitudinal du corps d'injecteur de sorte que lesdits premier et second canaux d'écoulement soient opposés l'un à l'autre au niveau d'une jonction avec l'orifice, et **caractérisé par**
c) un diviseur d'écoulement (80) défini dans chacun desdits canaux d'écoulement (62a ; 62b) à proximité de l'orifice (67), pour diviser l'écoulement en deux branches (84a, 84b), le diviseur d'écoulement étant configuré et conçu pour atténuer la formation d'un écoulement tourbillonnant sur les fluides traversant l'orifice (67) depuis le canal d'écoulement, chaque canal d'écoulement comprenant un coude en son sein s'étendant de l'orifice (67) à un point en amont de l'orifice, et le diviseur d'écoulement (80) s'étendant longitudinalement à travers une majorité de la courbure dans le canal d'écoulement (62a, 62b).

2. Injecteur selon la revendication 1, les deux branches (84a, 84b) de chaque canal d'écoulement (62a ; 62b) étant égales l'une à l'autre en surface d'écoulement.

3. Injecteur selon l'une quelconque des revendications précédentes, le ou chaque canal d'écoulement (62a ; 62b) respectif ayant une zone d'écoulement en amont des deux branches (84a, 84b) qui est sensiblement égale à celle des deux branches réunies.

4. Injecteur selon l'une quelconque des revendications précédentes, chaque diviseur d'écoulement (80) étant allongé dans une direction longitudinale et ayant une section transversale sensiblement rectangulaire perpendiculaire à une direction longitudinale sur sa longueur.

5. Injecteur selon l'une quelconque des revendications précédentes, chaque diviseur d'écoulement (80) étant espacé de l'orifice de sortie par une distance comprise entre 0,0 fois et 1,0 fois la largeur de l'orifice de sortie.

6. Injecteur selon l'une quelconque des revendications précédentes, le ou chaque diviseur d'écoulement (80) s'étendant dans une direction à l'opposé de l'orifice de sortie vers un point en amont du coude dans le canal respectif.

7. Injecteur selon l'une quelconque des revendications précédentes, le diviseur d'écoulement (80) faisant partie intégrante du corps d'injecteur.

8. Injecteur selon l'une quelconque des revendications précédentes, l'orifice de sortie ayant une forme qui s'écarte d'un cercle parfait.

9. Injecteur selon la revendication 8, l'orifice (64a, 64b) ayant une forme en section transversale choisie dans le groupe constitué par une forme de pilule, une forme oblongue et une forme ovoïde.

10. Injecteur selon l'une quelconque des revendications précédentes, l'injecteur étant un injecteur de carburant étagé comprenant ;
un circuit de carburant principal pour délivrer du carburant à un atomiseur de carburant principal, l'atomiseur de carburant principal (25) comprenant un dispositif de pré-filmage radialement extérieur (24) et un agitateur de carburant radialement intérieur (26), les parties du circuit de carburant principal étant formées dans le dispositif de pré-filmage (24) ; un circuit de carburant pilote pour délivrer du carburant à un atomiseur de carburant pilote (35) qui est situé radialement vers l'intérieur de l'atomiseur de carburant principal (25), le circuit de carburant pilote comprenant une pluralité de canaux d'écoulement (62a, 62b) définis dans le dispositif de pré-filmage (24) et le générateur de tourbillon de carburant (26), les canaux d'écoulement étant en communication fluidique avec un orifice (67) pour le passage des fluides hors des canaux d'écoulement, le circuit de carburant pilote ayant une configuration selon une revendication précédente.

11. Injecteur selon la revendication 10, le dispositif de pré-filmage radialement extérieur (24), le générateur de tourbillon de carburant radialement intérieur (26), et les diviseurs d'écoulement (80) faisant partie intégrante les uns des autres.
